# EUROPÄISCHE PATENTSCHRIFT

(11) **EP 2 552 667 B1**
(45) Veröffentlichungstag und Bekanntmachung des Hinweises auf die Patenterteilung: **02.07.2014**
(21) Anmeldenummer: 11863705.7
(22) Anmeldetag: 23.12.2011
(51) Int. Cl.: B29C 47/82, B29C 47/08, B29C 47/66, B29C 45/73, B29C 45/62, H05B 3/00

(54) **HEIZ-KÜHL-KOMBINATION FÜR PLASTIFIZIERZYLINDER**
HEATING-COOLING COMBINATION FOR AN EXTRUSION DEVICE
DISPOSITIF COMBINÉ DE CHAUFFE-REFROIDISSEMENT POUR UNE EXTRUDEUSE

(30) Priorität: 26.10.2010 DE 102010049374
(43) Veröffentlichungstag der Anmeldung: 06.02.2013
(73) Patentinhaber: Wema GmbH, 58515 Lüdenscheid (DE)
(72) Erfinder: BITTERN, Matthias, 58640 Iserlohn (DE); KÖRZEL, Karl, Werner, 58511 Lüdenscheid (DE)
(74) Vertreter: Dörner, Kötter & Kollegen
(86) Internationale Anmeldenummer: PCT/IB2011/003375
(87) Internationale Veröffentlichungsnummer: WO 2012/168759

(56) Entgegenhaltungen:
- EP-A1- 1 005 974
- DE-A1- 10 309 014
- DE-U1-202009 005 822
- DE-U1-202010 006 265
- JP-A- 57 102 327
- US-A- 5 447 190

## Beschreibung

Die Erfindung betrifft eine Heiz-Kühl-Kombination für Plastifizierzylinder nach dem Oberbegriff des Patentanspruchs 1.

Heiz-Kühl-Kombinationen kommen insbesondere in Extrusionsanlagen zur Anwendung. Diese heizen den Plastifizierzylinder auf die für die Verarbeitung erforderliche Temperatur auf und gleichen Wärmeverluste durch auftretende Abstrahlung aus. Der im Verarbeitungsprozess entstehende Wärmeüberschuss, die so genannte Friktionswärme, wird mittels von einem angeordneten Gebläse zugeführter Luft abgeführt. Ein kontinuierlicher Schmelzfluss wird auf diese Weise aufrecht erhalten.

Derartige Heiz-Kühl-Kombinationen sind aus den Druckschriften EP 1005 974 A1, DE 103 090 14 A1, und JP 57 102327 A bekannt. Sie bestehen im Wesentlichen aus einem Gehäuse, in dem zur Aufheizung des Plastifizierzylinders Heizbänder eingebracht sind. Weiterhin ist an dem Gehäuse ein Gebläse zur Erzeugung eines Luftstroms angeordnet. Der in das Gehäuse eingebrachte Luftstrom wird über gegenüberliegend dem Gebläse angeordnete Luftschlitze aus dem Gehäuse wieder abgeführt. Nachteilig an den vorgenannten Heiz-Kühl-Kombinationen ist, dass die in dem Gehäuse angeordneten Heizbänder im Falle eines defekten Heizbandes nur sehr aufwendig ersetzt werden können. Hierbei ist es insbesondere erforderlich, die Heiz-Kühl-Kombination vollständig von dem Plastifizierzylinder zu demontieren, um eine ausreichende Zugänglichkeit zu den Heizbändern zu erlangen.

Hier will die Erfindung Abhilfe schaffen. Der Erfindung liegt die Aufgabe zugrunde, eine Heiz-Kühl-Kombination zu schaffen, bei dem der Austausch einzelner Heizbänder erleichtert ist. Gemäß der Erfindung wird diese Aufgabe durch die Merkmale des kennzeichnenden Teils des Patentanspruchs 1 gelöst.

Mit der Erfindung ist eine Heiz-Kühl-Kombination geschaffen, bei welcher der Austausch einzelner Heizbänder erleichtert ist. Durch die Ausgestaltung des wenigstens einen Heizbandes aus Heizelementen, welche auf wenigsten einem Spannseil verschiebbar gelagert sind, wobei das wenigstens eine Spannseil über Spannplatten um den Plastifizierzylinder spannbar sind, kann ein defektes Heizelement einfach getrennt und aus dem Gehäuse herausgezogen werden. Die flexibel auf dem wenigsten einen Spannseil angeordneten Heizelemente weisen hierbei eine ausreichende Bewegungsfreiheit auf, so dass sie aus dem zylinderförmigen Gehäuse herausgezogen werden können. Auch das Einziehen eines neuen Heizbandes ist auf diese Weise ermöglicht. Theoretisch kann der hohlzylindrische Abschnitt auch einen vieleckigen oder sonstig ausgebildeten Querschnitt aufweisen, jedoch ist ein derart ausgebildeter, nicht runder Plastifizierzylinder aufgrund seiner inhomogenen Wärmeverteilung nicht zu empfehlen.

Vorteilhaft können je nach Anwendungsfall zusätzliche Kühlbänder angeordnet sein, welche in entsprechender Art und Weise durch auf wenigsten einem Spannseil angeordnete Kühlelemente gebildet sind. Hierdurch kann die Kühlleistung der Vorrichtung erhöht werden.

In Weiterbildung der Erfindung ist an der Gehäuseinnenwandung des hohlzylindrischen Abschnitts wenigstens eine Führung zur Aufnahme des wenigstens einen Heizbandes angeordnet. Hierdurch ist das Einziehen eines neuen Heizbandes in die erforderliche Position vereinfacht.

In Weiterbildung der Erfindung ist die wenigstens eine Führung durch Sicken gebildet. Derartige Führungen sind besonders einfach herzustellen.

In Ausgestaltung der Erfindung ist in dem Gehäuse wenigstens ein Kanal zur Durchführung eines Stromkabels des wenigstens einen Heizbandes angeordnet. Hierdurch ist der Anschluss eines neuen Heizbandes erleichtert. Dabei erstreckt sich bevorzugt wenigstens ein Kanal zur Durchführung eines Stromkabels in den zylindrischen Abschnitt des Gehäuses, wodurch die Einfädelung und Weiterführung des Stromkabels weiter vereinfacht ist.

In weiterer Ausgestaltung der Erfindung ist an dem Gehäuse ein elektrisches Anschlussmodul angeordnet, an das die Versorgungskabel des wenigstens einen Heizbandes anschließbar ist. Hierdurch ist ein zentraler Anschlussort für die Stromversorgungskabel der einzelnen Heizbänder erzielt, an dem die Versorgungskabel vorteilhaft mittels schraubloser Klemmverbindungen befestigt werden können. Die einzelnen Versorgungskabel der Heizbänder sind hierdurch über einen zentralen Stromanschluss an eine Spannungsquelle anschließbar.

In der Heiz-Kühl-Kombination gemäß der Erfindung sind wenigstens zwei Heiz- und/oder Kühlbänder angeordnet, deren Spannseilenden mit jeweils einer gemeinsamen Spannplatte für beide Heizbänder verbunden sind. Hierdurch ist ein gleichzeitiges Entfernen bzw. Einziehen mehrerer - bzw. Kühlbänder ermöglicht. Zudem ist ein Verspannen mehrerer Heizbänder über lediglich zwei Spannplatten ermöglicht, wodurch der Aufwand von Heiz- und/oder Kühlbändern weiter minimiert werden kann.

Die Heizelemente des wenigstens einen Heizbandes wenigstens eine Durchführung für das wenigstens eine Spannseil auf, welche radial versetzt zu den Durchführungen für die Heizwände angeordnet sind. Hierdurch ist ein Verspannen der Heizelemente bei gleichzeitig maximierter Heizfläche ermöglicht.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

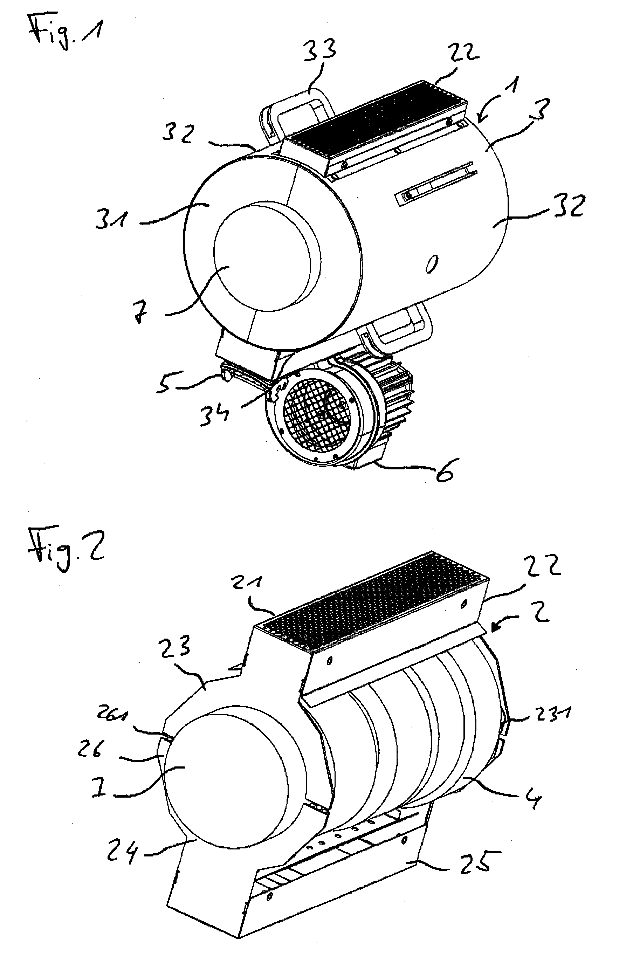

- Fig. 1: die räumliche Darstellung einer Heiz-Kühl-Kombination;
- Fig. 2: die Darstellung des Rahmenkörpers der Heiz-Kühl-Kombination aus Figur 1;
- Fig. 3: die schematische Darstellung eines Heizbandes;
- Fig. 4: die schematische Darstellung eines Heizbandes in einer zweiten Ausführungsform und
- Fig. 5: die schematische Darstellung einer Anordnung von drei Heizbändern mit gemeinsamen Spannplatten.

Die Heiz-Kühl-Kombination besteht im Wesentlichen aus einem Gehäuse 1 zur Aufnahme eines Plastifizierzylinders 7, in dem den Plastifizierzylinder umgebend Heizbänder 4 angeordnet sind. An der Unterseite des Gehäuses 1 ist ein Gebläse 6 zum Eintrag eines Luftstroms angeordnet. Dem Gebläse 6 gegenüberliegend befindet sich zum Austritt des Luftstroms ein Entlüftungsdom 22.

Das Gehäuse 1 ist gebildet aus einem Rahmenkörper 2, der im Bereich des hohlzylindrischen Abschnitts des Gehäuses 1 von einem Außenmantel 3 umgeben ist, der mit dem Rahmenkörper 2 lösbar verbunden ist.

Der Rahmenkörper 2 ist gebildet aus einem Rahmenoberteil 21 und einem Rahmenunterteil 23. Das Rahmenoberteil setzt sich zusammen aus zwei parallel zueinander angeordneten Flanschteilen 23, welche in Art einer Halbronde ausgebildet und über einen kastenartig ausgebildeten Entlüftungsdom 22 miteinander verbunden sind. Endseitig sind an den Flanschteilen 23 Laschen 231 zur Aufnahme einer Spannschraube angeordnet.

Das Rahmenunterteil 24 in gleicher Weise gebildet durch zwei beabstandet zueinander angeordnete halbrondenförmige Flanschteile 26, welche über einen kastenförmig ausgebildeten Gebläseanschlusskasten 25 miteinander verbunden sind. Auch die Flanschteile 26 sind endseitig mit Laschen 261 zur Aufnahme einer Spannschraube versehen. Rahmenoberteil 21 und Rahmenunterteil 24 werden derart an einem Plastifizierzylinder 7 montiert, dass die Flanschteile 23, 26 gegenüberliegend an den Plastifizierzylinder anliegen. Anschließend wird eine Spannschraube durch die Laschen 231, 261 der Flanschteile 23, 26 geführt, wodurch Rahmenoberteil 21 und Rahmenunterteil 24 um den Plastifizierzylinder 7 verspannt werden können. Zwischen den Flanschteilen 23, 26 sind im Ausführungsbeispiel beabstandet zueinander vier Heizbänder 4 um den Plastifizierzylinder 7 gespannt.

Der Rahmenkörper 2 ist zwischen dem Entlüftungsdom 22 und dem Gebläseanschlusskasten 25 von einem Außenmantel 3 umgeben, der durch zwei miteinander verbundene Mantelhalbschalen 31 gebildet ist. Die Halbschalen 31 weisen im Ausführungsbeispiel eine Öffnung auf, welche den Zugriff auf die Heizbänder 4 ermöglicht und die über einen Deckel 32 verschließbar ist, der mit der Halbschale 31 schwenkbar verbunden ist. Die Deckel 32 sind über an diese angebrachte Griffe 33 betätigbar. Im Ausführungsbeispiel sind die Deckel 32 über Scharniere 34 in Richtung des Gebläseanschlusskastens 35 schwenkbar. Dabei sind etwa 2/3 der Mantelfläche des Außenmantels 3 über die Deckel 32 zugänglich. Zur erleichterten Einführung der Heizbänder 4 sind innenseitig in den Mantelhalbschalen 31 unterhalb der Deckel 32 - nicht dargestellte - Führungen eingebracht, welche durch parallel zueinander angeordnete Sicken ausgebildet sind. Diese - nicht dargestellten - Sicken bilden gleichzeitig einen Kanal zur Durchführung eines Stromkabels der Heizbänder, durch den die Stromkabel in Richtung des elektrischen Anschlussmoduls geführt sind.

Alternativ können auch zwei Halbschalen direkt über Scharniere mit dem Rahmenkörper 2, bevorzugt mit dem Gebläseanschlusskasten 25 schwenkbar verbunden sein. In dieser Ausführungsform fungieren die Halbschalen als Deckel, wobei bevorzugt an den Entlüftungsdom 22 ein Verschluss, beispielsweise ein Schraubverschluss angeordnet ist.

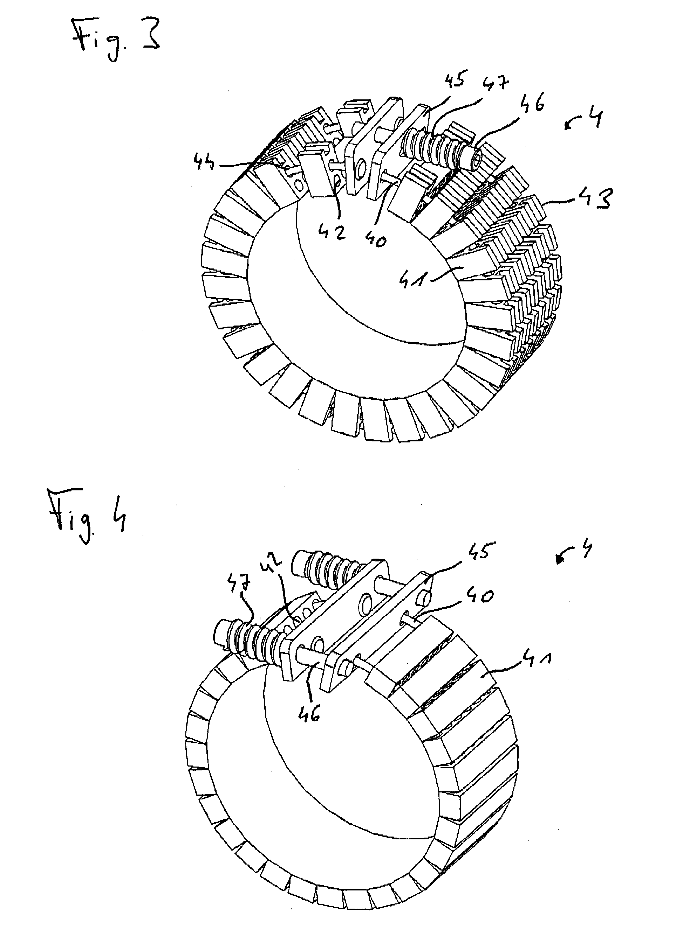

Die Heizbänder 4 sind aus Heizelementen 41 gebildet, die auf zwei parallel zueinander angeordneten Spannseilen 40 aufgefädelt sind. Die Heizelemente 41 sind weitgehend quaderförmig ausgebildet und weisen Kanäle 42 zur Durchführung von - nicht dargestellten - Heizdrähten auf. Radial beabstandet zu den Kanälen 42 für die - nicht dargestellten - Heizdrähte sind parallel zueinander zwei Spannseilkanäle 44 zur Durchführung der Spannseile 40 eingebracht. Die Heizelemente 41 sind im Ausführungsbeispiel mit Kühlrippen 43 versehen. Die durch die Heizelemente 41 geführten Spannseile sind endseitig jeweils mit einer Spannplatte 45 verbunden. Die Spannplatten 45 sind mit einer Spannschraube 46 verbunden, über welche sie um den Plastifizierzylinder 7 spannbar sind. Die Spannschraube 46 ist dabei über eine Feder 47 vorgespannt (vgl. Figur 3).

In Figur 4 ist eine weitere Gestaltungsmöglichkeit eines Heizbandes dargestellt. Dabei sind die Spannplatten 45 derart ausgebildet, dass sie beidseitig über die Heizelemente 41 hinausragen. In diesen über die Heizelemente 41 hinausragenden Abschnitten sind zur Verspannung der Spannplatten 45 zwei Spannschrauben 46 angeordnet. Die Heizelemente 71 weisen in dieser Ausführungsform lediglich eine Reihe von Kanälen auf. Dabei dienen die äußeren beiden Kanäle als Spannseilkanäle 44; die übrigen Kanäle 42 dienen der Durchführung von - nicht dargestellten - Heizdrähten.

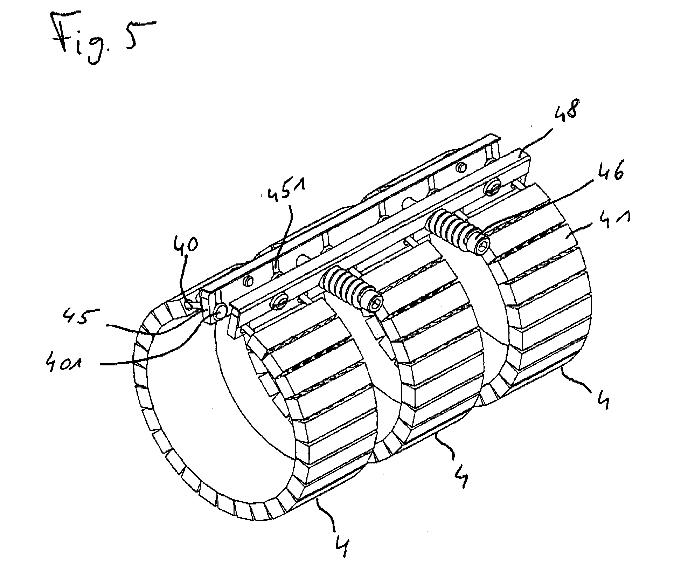

In Figur 5 sind drei Heizbänder 4 in der zuvor beschriebenen Art und Weise durch auf Spannseile 40 aufgezogene Heizelemente 41 gebildet. Die Spannseile 40 der drei Heizbänder 4 sind an beiden Enden jeweils mit einer gemeinsamen Spannplatte 45 verbunden. Hierzu sind in den Spannplatten 45 Schlitze 451 eingebracht, in welche die mit einem Pilzkopf 401 versehenen Enden der Spannseile 40 eingebracht sind. Die Schlitze 451 sind über eine abgewickelte Abschlussschiene 48, die mit der jeweiligen Spannplatte 45 verschraub ist, verschlossen. Jeweils zwischen zwei Heizbändern 4 sind die beiden Spannplatten 45 von einer Spannplatte 46 durchdrungen, über welche die drei Heizbänder 4 um einen Plastifizierzylinder 7 spannbar sind.

## Patentansprüche

1. Heiz-Kühl-Kombination für Plastifizierzylinder, umfassend eine Gehäuse, an dem ein Gebläse angeordnet ist und das Entlüftungsöffnungen zum Austritt des Gebläseluftstroms aufweist, wobei das Gehäuse einen hohlzylindrischen Abschnitt zur Aufnahme eines Plastifizierzylinders aufweist, in dem wenigstens ein Heizband angeordnet ist, wobei das wenigstens eine Heizband (4) aus mit radialen Kühlrippen (43) versehenen Heizelementen (41) gebildet ist, welche auf wenigstens einem Spannseil (40) mit rundem Querschnitt verschiebbar gelagert sind und durch die Heizwendeln geführt sind, wobei die Heizelemente (41) des wenigstens einen Heizbandes (4) wenigstens eine Durchführung (44) für das wenigstens eine Spannseil (40) aufweisen, welche radial versetzt zu den Durchführungen (42) für die Heizwendeln in zumindest einer radialen Kühlrippe (43) angeordnet sind, **dadurch gekennzeichnet, dass** das Spannseil (40) endseitig jeweils mit einer Spannplatte (45) verbunden ist und wobei die beiden Spannplatten (45) über wenigstens ein Spannelement miteinander verbunden sind, wobei wenigstens zwei Heizbänder (4) angeordnet sind, deren Spannseilenden mit jeweils einer gemeinsamen Spannplatte (45) für beide Heizbänder (4) verbunden sind, wobei die Enden der Spannseile (40) der wenigstens zwei Heizbänder mit einem Pilzkopf (401) versehen sind und wobei in den Spannplatten (45) Schlitze (451) eingebracht sind, in welche die Pilzköpfe (401) der Spannseile (40) eingebracht sind, wobei die Schlitze (451) über eine abgewinkelte Abschlussschiene (48), die mit der jeweiligen Spannplatte (45) verschraubt ist, verschlossen sind und wobei die beiden Spannplatten (45) jeweils zwischen zwei Heizbändern von einer Spannschraube (46) durchdrungen sind, über welche die Heizbänder um einen Plastifizierzylinder (7) spannbar sind.

2. Heiz-Kühl-Kombination nach Anspruch 1, **dadurch gekennzeichnet, dass** wenigstens ein Kühlband angeordnet ist, das aus Kühlelementen gebildet ist, welche auf wenigstens einem Spannseil (40) verschiebbar gelagert sind, wobei das Spannseil (40) endseitig jeweils mit einer Spannplatte (45) verbunden ist, wobei die beiden Spannplatten (45) über wenigstens ein Spannelement miteinander verbunden sind.

3. Heiz-Kühl-Kombination nach Anspruch 1 oder 2, **dadurch gekennzeichnet, dass** an der Innenwandung des hohlzylindrischen Abschnitts des Gehäuses (1) wenigstens eine Führung zur Aufnahme des wenigstens einen Heizbandes (4) angeordnet ist.

4. Heiz-Kühl-Kombination nach Anspruch 3, **dadurch gekennzeichnet, dass** die wenigstens eine Führung durch Sicken gebildet ist.

5. Heiz-Kühl-Kombination nach einem der vorgenannten Ansprüche, **dadurch gekennzeichnet, dass** in dem Gehäuse (1) wenigstens ein Kanal zur Durchführung eines Stromkabels des wenigstens einen Heizband (4) angeordnet ist.

6. Heiz-Kühl-Kombination nach Anspruch 4, **dadurch gekennzeichnet, dass** sich wenigstens ein Kanal zur Durchführung eines Stromkabels in den zylindrischen Abschnitt des Gehäuses (1) erstreckt.

7. Heiz-Kühl-Kombination nach einem der vorgenannten Ansprüche, **dadurch gekennzeichnet, dass** an dem Gehäuse (1) ein elektrisches Anschlussmodul (5) angeordnet ist, an das die Versorgungskabel des wenigstens einen Heizbandes (4) anschließbar ist.

## Claims

1. Heating-cooling combination for an extrusion device comprising a housing on which a ventilator fan is arranged, and which has venting openings to allow the current of air from the fan to escape, where the housing has a hollow-cylindrical section to receive an extrusion device, in which at least one heater band is arranged, where the heater band (4) or heater bands are formed of heating elements (41) fitted with radial cooling fins (43), which heating elements are mounted movably on at least one tensioning cord (40) with a round cross section and are guided through the heating spirals, where the heating elements (41) of the heater band (4) or heater bands have at least one duct (44) for the tensioning cord (40) or tensioning cords, which are radially offset in relation to the ducts (42) for the heating spirals in at least one radial cooling fin (43), **characterised in that** the tensioning cord (40) is connected at each of its ends to a tensioning plate (45) and where the two tensioning plates (45) are connected to one another via at least one tensioning element, where least two heater bands (4) are arranged, the ends of whose tensioning cords are each connected to a common tensioning plate (45) for both heater bands (4), where the ends of the tensioning cord (40) of the two or more heater bands, have mushroom heads (401), and where the tensioning plates (45) have slots (451) into which the mushroom heads (401) of the tensioning cord (40) are fitted, where the slots (451) are closed by an angled end strip (48) which is bolted to the corresponding tensioning plate (45), and where the two tensioning plates (45) are penetrated by a tensioning screw (46) between two heater bands, by means of which the heater bands can be tensioned around an extrusion device (7).

2. Heating-cooling combination in accordance with claim 1, **characterised in that** at least one cooling band is arranged which is formed of cooling elements which are mounted movably on at least one tensioning cord (40), where the tensioning cord (40) is connected at each of its ends to a tensioning plate (45), where the two tensioning plates (45) are connected to one another via at least one tensioning element.

3. Heating-cooling combination in accordance with claim 1 or claim 2, **characterised in that** at least one guide is arranged on the inner wall of the hollow-cylindrical section of the housing (1) in order to receive the heater band (4) or heater bands.

4. Heating-cooling combination in accordance with claim 3, **characterised in that** the guide or guides are formed by beads.

5. Heating-cooling combination in accordance with any of the aforementioned claims, **characterised in that** at least one duct is arranged in the housing (1) for a power cable for the heater band or heater bands (4).

6. Heating-cooling combination in accordance with claim 4, **characterised in that** at least one duct for a power cable extends into the cylindrical section of the housing (1).

7. Heating-cooling combination in accordance with any of the aforementioned claims, **characterised in that** an electrical connection module (5) is arranged in the housing (1) to which the cable supplying the power to the heater band (4) or heater bands is connected.

## Revendications

1. Dispositif combiné de chauffe-refroidissement pour une extrudeuse, comprenant un carter contre lequel est agencé une soufflerie et qui présente des orifices d'évacuation d'air permettant au flux d'air de la soufflerie de sortir, sachant que le carter présente un segment cylindrique creux permettant de recevoir une extrudeuse dans laquelle est agencé au moins un ruban chauffant, sachant qu'au moins un ruban chauffant (4) est formé par des éléments chauffants (41) équipés de nervures de refroidissement (43) radiales, éléments qui sont guidés en appui coulissant sur au moins un câble tendeur (40) de section ronde, et qui sont guidés à travers les serpentins de refroidissement, sachant que les éléments chauffants (41) d'au moins un ruban chauffant (4) présentent au moins un orifice (44) permettant le passage d'au moins un câble tendeur (40), orifices qui sont agencés décalés radialement par rapport aux orifices (42) de passage des serpentins chauffants dans au moins une nervure de refroidissement (43) radiale, **caractérisé en ce que** chaque extrémité du câble tendeur (40) est reliée avec une plaque de tensionnement (45) et sachant que les deux plaques de tensionnement (45) sont reliées entre elles via au moins un élément tendeur, sachant que sont agencés au moins deux rubans chauffants (4) dont les extrémités des câbles tendeurs sont reliées chacune avec une plaque de tensionnement (45) conjointe pour les deux rubans chauffants (4), sachant que les extrémités des câbles tendeurs (40) d'au moins ces deux rubans chauffants sont équipées d'une tête fongiforme (401) et sachant que des fentes (451) ont été ménagées dans les plaques de tensionnement (45), fentes dans lesquelles ont été introduites les têtes fongiformes (401) des câbles tendeurs (40), sachant que les fentes (451) sont obturées via un rail terminal (48) coudé, rail qui est vissé contre la plaque de tensionnement (45) respective, et sachant que les deux plaques de tensionnement (45) sont traversées chaque fois, entre deux rubans chauffants, par une vis de tensionnement (46) via laquelle il est possible tendre les rubans chauffants autour d'une extrudeuse (7).

2. Dispositif combiné de chauffe-refroidissement selon la revendication 1, **caractérisé en ce qu'**est agencé au moins un ruban de refroidissement formé par des éléments de refroidissement en appui coulissant sur au moins un câble tendeur (40), sachant que le câble tendeur (40) est relié à chaque extrémité avec une plaque de tensionnement (45), sachant que les deux plaques de tensionnement (45) sont reliées entre elles via au moins un élément tendeur.

3. Dispositif combiné de chauffe-refroidissement selon la revendication 1 ou 2, **caractérisé en ce que** contre la paroi intérieure du segment cylindrique creux que présente le carter (1) est agencé au moins un guidage recevant au moin un ruban chauffant (4).

4. Dispositif combiné de chauffe-refroidissement selon la revendication 3, **caractérisé en ce qu'**au moins un guidage est formé par moulurage.

5. Dispositif combiné de chauffe-refroidissement selon l'une des revendications précédentes, **caractérisé en ce que** dans le carter (1) est agencé au moins un conduit permettant de faire passer le câble électrique d'au moins un ruban chauffant (4).

6. Dispositif combiné de chauffe-refroidissement selon la revendication 4, **caractérisé en ce qu'**au moins un conduit de passage d'un câble électrique s'étend dans le segment cylindrique du carter (1).

7. Dispositif combiné de chauffe-refroidissement selon l'une des revendications précédentes, **caractérisé en ce que** contre le carter (1) est agencé un module de raccordement électrique (5) contre lequel il est possible de raccorder le câble d'alimentation d'au moins un ruban chauffant (4).
